# EUROPÄISCHE PATENTSCHRIFT

(11) **EP 1 254 010 B1**
(45) Veröffentlichungstag und Bekanntmachung des Hinweises auf die Patenterteilung: **14.06.2006**
(21) Anmeldenummer: 00981206.6
(22) Anmeldetag: 21.10.2000
(51) Int. Cl.: B29C 47/68

(54) **VERFAHREN ZUR HOMOGENISIERUNG UND GLEICHMÄSSIGEN VERTEILUNG VON VISKOSEN FLÜSSIGKEITEN UND VORRICHTUNG HIERFÜR**
METHOD FOR THE HOMOGENISATION AND UNIFORM DISTRIBUTION OF VISCOUS LIQUIDS AND A DEVICE THEREFOR
PROCEDE D'HOMOGENEISATION ET DE REPARTITION REGULIERE DE LIQUIDES VISQUEUX ET DISPOSITIF ASSOCIE

(30) Priorität: 26.10.1999 DE 19951386
(43) Veröffentlichungstag der Anmeldung: 06.11.2002
(73) Patentinhaber: Dyring, Johannes, 75 756 Uppsala (SE)
(72) Erfinder: Dyring, Johannes, 75 756 Uppsala (SE)
(74) Vertreter: Weber, Dieter
(86) Internationale Anmeldenummer: PCT/EP2000/010384
(87) Internationale Veröffentlichungsnummer: WO 2001/030556

(56) Entgegenhaltungen:
- DE-A- 2 153 466
- GB-A- 1 347 335
- JP-A- 4 275 128
- US-A- 3 304 577
- US-A- 3 495 299
- US-A- 4 209 563
- US-A- 5 389 412
- PATENT ABSTRACTS OF JAPAN vol. 1996, no. 12, 26. Dezember 1996 (1996-12-26) & JP 08 207117 A (FUJI PHOTO FILM CO LTD), 13. August 1996 (1996-08-13)

## Beschreibung

Die vorliegende Erfindung betrifft ein Verfahren zum Herstellen von Formteilen durch Extrudieren aus einer viskosen Flüssigkeit, bei welchem zur Homogenisierung und gleichmäßigen Verteilung die viskose Flüssigkeit durch einen porösen Körper geführt wird, der für die viskose Flüssigkeit permeabel ist. Ebenso betrifft die vorliegende Erfindung auch eine entsprechende Vorrichtung zur Durchführung dieses Verfahrens.

Ein solches Verfahren und eine entsprechende Vorrichtung sind aus den Patent Abstracts of Japan, Veröffentlichungsnr. 08207117 bekannt. Bei dieser bekannten Vorrichtung und dem damit durchgeführten Verfahren ist hinter einer Extruderschnecke eine Filtereinheit beispielsweise aus gesinterten Fasern angeordnet, die sich wiederum in einigem Abstand vor einer Extrudieröffnung befindet.

In der US-A-4,299,563 ist ein Verfahren zum Herstellen einer elastischen Materialbahn beschrieben, bei welcher die Materialbahn mit in situ aus einer viskosen Flüssigkeit extrudierten Filamenten versehen wird. Vor der Extrusion der Faser bzw. Filamente wird auch hier die viskose Flüssigkeit in einem Sinterkörper gefiltert. Es werden aber lediglich Fasern und keine Formteile extrudiert. Dabei befindet sich der Sinterkörper außerdem in erheblichem Abstand von den Austrittsöffnungen und ist in Bereichen angeordnet, in welchen der Durchflußquerschnitt noch ein Vielfaches des Querschnitts der Austrittsöffnungen beträgt.

Die Homogenisierung und gleichmäßige Verteilung von Flüssigkeiten mit relativ hoher Viskosität ist in vielen technischen Bereichen ein wichtiges Problem. So muß z.B. in der Kunststoffverarbeitung beim Extrudieren nach dem Verdichten und Plastifizieren der Formmasse darauf geachtet werden, daß die plastifizierte Formmasse möglichst gleichmäßig und homogen und insbesondere auch blasenfrei durch das Extrudierwerkzeug tritt. Insbesondere bei der Herstellung von Hohlprofilen ist das Extrudierwerkzeug jedoch sehr komplex aufgebaut, so daß die Formmasse durch verschiedene Kanäle innerhalb des Extrudierwerkzeugs geleitet wird, wobei einen Hohlraum im Profil definierende Formteile hinreichend weit von der Austrittsöffnung der Extrudiermasse entfernt im Inneren des Extrudierwerkzeugs befestigt werden müssen, damit die durch notwendige Halterungen oder innere Abschnitte des eigentlich formgebenden Abschnittes getrennte und daran vorbeitretende Extrudiermasse vor dem Austritt und Verfestigen im Bereich der Austrittsöffnung wieder zusammenfließen kann, um einen Profilhohlraum zu umschließen.

Durch eine zu lange Trennung, vorzeitige Abkühlung oder einfach durch eine zu kurze Vereinigungsstrecke oder ungleichmäßiges Fließen der Formmasse bilden sich im Extrudat oftmals Fließnähte, die sich bei der weiteren Verarbeitung und dem Gebrauch der Kunststoffhalbzeuge oder - Fertigteile oftmals als Schwachstelle erweisen.

Um einen gleichmäßigen Materialfluß zu erreichen, wird in Extrudiermaschinen großer Wert auf eine äußerst gleichmäßig arbeitende Pumpe, die die Formmasse verdichtet, plastifiziert und fördert, gelegt. Oftmals kommen daher kostenintensive und aufwendig gestaltete Zahnradpumpen zum Einsatz. Viele komplizierte Profile sind jedoch mit Extrusionsverfahren und bei Verwendung bestimmter, vorgegebener Materialien nicht, zumindest nicht mit der gewünschten Genauigkeit, herstellbar.

Beim Spritzgießen kommt es häufig bei ungehindertem Eintritt der Schmelze bzw. Flüssigkeit in das Werkzeug zu dem sogenannten ,jetting' (auf deutsch: Freistrahlbildung). Um dieses zu verhindern, muß die Schmelze gegen eine Werkzeugwand geleitet werden, was eine Verkomplizierung des Angußsystems und des Werkzeuges bedeutet.

Der vorliegenden Erfindung liegt daher die Aufgabe zugrunde, ein Verfahren und eine Vorrichtung zur Homogenisierung und gleichmäßigen Verteilung von viskosen Flüssigkeiten zu schaffen, das äußerst effektiv und zudem noch kostengünstig zu verwirklichen ist und nach Möglichkeit auch die Möglichkeiten zur Herstellung komplizierter Extrusionsprofile deutlich erweitert.

Hinsichtlich des Verfahrens wird diese Aufgabe dadurch gelöst, daß die Flüssigkeit unmittelbar vor dem Durchtritt durch das Formgebungsprofil durch den porösen Körper geführt wird. Der poröse Körper sorgt dafür, daß die viskose Flüssigkeit nach dem Durchlaufen des porösen Körpers nahezu keine seitlichen Geschwindigkeitskomponenten mehr aufweist, so daß das eingangs erwähnte "jetting" fast vollständig unterbunden ist.

Dabei sollte die viskose Flüssigkeit bzw. Masse nach Möglichkeit durch Poren hindurchgedrückt werden, die im Mittel höchstens 1 mm vorzugsweise höchstens 0,2 mm oder weniger im Durchmesser bzw. Durchflußquerschnitt aufweisen.

Besonders bevorzugt ist ein Verfahren, bei dem die viskose Flüssigkeit unter einem Überdruck durch den porösen Körper geführt wird, wobei der poröse Körper im wesentlichen vollständig von der viskosen Flüssigkeit durchdrungen wird. Dadurch ist es möglich, eine Druckdifferenz entlang des porösen Körpers aufzubauen. Das heißt, daß auf der Zuführseite des porösen Körpers die viskose Flüssigkeit einen höheren Innendruck aufweist als auf der Ausgangsseite des porösen Körpers. Dies hat den Vorteil, daß jegliche Druckschwankungen innerhalb der viskosen Flüssigkeit durch den porösen Körper nivelliert werden. Die austretende viskose Flüssigkeit hat dadurch eine höhere Homogenität und tritt zudem gleichmäßig über die gesamte Ausgangsfläche des porösen Körpers aus.

Besonders bevorzugt ist ein Verfahren, bei dem die viskose Flüssigkeit unter einem Überdruck von mindestens 1 bar durch den porösen Körper geführt wird.

Auch wenn dieses Verfahren prinzipiell für die Homogenisierung und gleichmäßige Verteilung von beliebigen viskosen Flüssigkeiten geeignet ist, so sind doch die Vorteile des Verfahrens besonders groß, wenn als viskose Flüssigkeit plastifizierter Kunststoff verwendet wird. Insbesondere bei der Kunststoffverarbeitung ist die Homogenisierung und gleichmäßige Verteilung der Formmasse ein wesentliches Qualitätsmerkmal. Daher ist es besonders vorteilhaft, das erfindungsgemäße Verfahren in das herkömmliche in der Technik bekannte Extrudierverfahren zu integrieren.

Das Verfahren weist besonders bevorzugt die Schritte auf:
Verdichten der Formmasse,
Plastifizieren der Formmasse,
Pressen der Formmasse durch einen porösen Körper und
Pressen der Formmasse durch ein Extrudierwerkzeug bzw. Formgebungswerkzeug.

Dadurch, daß die Formmasse, möglichst unmittelbar bevor sie durch ein Formgebungsprofil gepreßt wird, zunächst durch einen porösen Körper geleitet wird, ist gewährleistet, daß die Formmasse sehr homogen und gleichmäßig durch das Formgebungswerkzeug treten kann.

Zudem kann das Formgebungswerkzeug direkt auf dem porösen Körper befestigt werden, so daß es sehr viel einfacher ausgestaltet werden kann. Die, insbesondere bei Hohlformen, notwendige Zufuhr der Formmasse über einzelne Kanäle in dem Formwerkzeug entfällt. Statt der eingangs erwähnten Fließnaht können sich bei diesem Verfahren höchstens eine Vielzahl kleinster Fließnähte bilden, die jedoch keine die Festigkeit des Materials beeinträchtigende Schwachstellen bilden und deshalb bei der weiteren Verarbeitung der Kunststoffhalbzeuge oder Fertigteile kein Problem darstellen. Wegen der nur sehr kurzen Trennung und Wiederzusammenführung des Materials an und zwischen den kleinen Poren ist aber die Tendenz zur Fließnahtbildung ohnehin fast vollständig unterdrückt.

Ein besonders bevorzugtes Verfahren sieht vor, daß die Struktur des Formgebungswerkzeugs erst ausgebildet wird, nachdem das Werkzeug auf dem porösen Körper aufgebracht worden ist. Das Aufbringen eines Werkzeuggrundkörpers, zum Beispiel in Form einer hinreichend stabilen Metallplatte, auf dem porösen Körper kann beispielsweise durch Verschweißen, Löten, Kleben, Nageln, Schrauben oder eine direkte formschlüssige Verbindung erfolgen. Die Ausgestaltung der Form kann anschließend beispielsweise durch Bohren, Fräsen, Ätzen oder auch mittels eines Lasers durch Einbrennen der gewünschten Strukturen in den Werkzeuggrundkörper erfolgen.

Hinsichtlich der Vorrichtung wird die eingangs erwähnte Aufgabe durch eine Vorrichtung gemäß dem Oberbegriff des Anspruchs 5 gelöst, welche dadurch gekennzeichnet ist, daß das Formgebungsprofil mit seinen strukturbildenden Elementen unmittelbar mit dem porösen Körper verbunden ist.

Wesentlich für die Vorrichtung ist somit, daß die viskose Flüssigkeit unmittelbar vor den Austrittsöffnungen durch den porösen Körper geleitet wird, so daß hinter dem porösen Körper keine nennenswerten Querkomponenten der Fließrichtung mehr auftreten, und daß die viskose Flüssigkeit möglichst nicht, oder nur dort, wo es ausdrücklich beabsichtigt ist, um ihn herum fließt.

Bei der Verwendung in einem Extrudierwerkzeug sollte der poröse Körper möglichst nahe am Formgebungs- und Verfestigungsbereich des Extrusionsmaterials angeordnet sein.

Der poröse Körper hat vorzugsweise Porenöffnungen mit einem mittleren Durchmesser von höchstens 0,2 mm. Je nach Anwendungsfall können jedoch auch deutlich kleinere Porenöffnungen vorteilhaft sein. Kleinere Porenöffnungen sorgen dafür, daß die viskose Flüssigkeit noch homogener und gleichmäßiger verteilt wird. Sehr kleine Porenöffnungen führen jedoch unter Umständen dazu, daß der poröse Körper einen großen Fließwiderstand aufweist. In diesem Fall erhöht sich zwangsläufig die Zeit, die die viskose Flüssigkeit benötigt, um durch den porösen Körper hindurch zu treten. Dies kann zwar zum Teil durch einen höheren Druck auf der Zuführseite der Vorrichtung ausgeglichen werden, insgesamt wird das Verfahren jedoch zeitaufwendiger. Es muß also je nach Anwendungsfall ein Kompromiß zwischen Homogenisierung und gleichmäßiger Verteilung, das heißt möglichst kleinen Porenöffnungen, und akzeptabler Verfahrensdauer, das heißt möglichst großen Porenöffnungen, gefunden werden.

Andererseits sind jedoch auch sogenannte nicht-newtonsche Flüssigkeiten bekannt, deren Viskosität mit Erhöhung der Fließgeschwindigkeit und der inneren Reibungs- bzw. Scherkräfte abnimmt, so daß eine Verkleinerung der Poren gerade für solche Flüssigkeiten oder pastöse Massen zu einer Verbesserung des Fließverhaltens führt.
Der poröse Körper besteht vorzugsweise aus einem Sintermaterial, das aus Sinterpulver mit Komgrößen im Bereich zwischen 0,1 und 1.000 µm, vorzugsweise im Bereich zwischen 10 und 500 µm, hergestellt wurde. Selbstverständlich ist es auch möglich, den porösen Körper beispielsweise aus mehreren Lagen eines ausreichend dichten Gewebes oder Netzes herzustellen. Ebenso könnte eine Lochplatte mit sehr feinen, dicht beieinander liegenden Bohrungen oder dergleichen vorgesehen sein.

Des weiteren sind auch anders hergestellte, offenporige Strukturen und Materialien im Stand der Technik bekannt. Zum Beispiel kann der poröse Körper aus einem zunächst massiven Material (zum Beispiel einer keramischen Masse bzw. Grünform) hergestellt sein, das einen (fein verteilten) Porenbildner enthält. Durch Erhitzen bzw. Brennen bilden sich dann die Poren in dem Material aus.

Eine bevorzugte Ausführungsform der vorliegenden Erfindung sieht im Bereich der Austrittsöffnung ein Formgebungswerkzeug vor. Dieses Formgebungswerkzeug kann prinzipiell jede beliebige Struktur aufweisen. Ein einfaches Beispiel ist eine kreisförmige Struktur zur Herstellung von Schläuchen bzw. Rohren. es von Vorteil, wenn poröser Körper und Formgebungswerkzeug im wesentlichen fest und z. B. formschlüssig miteinander verbunden sind. Alternativ kann der Werkzeuggrundkörper auch bei der Herstellung des porösen Körpers in diesen integriert werden. Dadurch ist gewährleistet, daß das aus dem porösen Körper austretende viskose Material, welches zu diesem Zeitpunkt äußerst homogen und gleichmäßig verteilt ist, direkt in bzw. durch das Formgebungswerkzeug geleitet wird.

Eine besonders bevorzugte Ausführungsform sieht vor, daß der poröse Körper in Austrittsrichtung von einer für die viskose Flüssigkeit zunächst undurchlässigen Schicht begrenzt wird, die aus demselben Material wie der poröse Körper bestehen kann und in die Rillen oder Löcher für den Austritt der viskosen Flüssigkeit eingebracht sind, die zusammen eine gewünschte Profilstruktur definieren. In dieser Weise können selbst für die kompliziertesten Ausgestaltungen von Formteilen Formgebungswerkzeuge sehr einfach hergestellt werden. Die üblicherweise notwendige Zuführung der Formmasse durch einzelne Kanäle kann entfallen, da zumindest Teile des Formgebungswerkzeugs direkt auf den porösen Körper aufgebracht werden können.

Dabei kann die eigentliche Form auch quer verlaufende Kühlkanäle bzw. -Bohrungen aufweisen, durch welche ein Kühlmittel hindurchgeführt wird, so daß unmittelbar nach dem Austritt des viskosen Materials aus dem porösen Körper und noch innerhalb der Form eine Kühlung und damit - gegebenenfalls verbunden Verfestigung des Materials eintritt, was die Herstellung präziserer Strukturen ermöglicht.

Für manche Anwendungen kann es von Vorteil sein, wenn der poröse Körper nicht homogen ist. Vorzugsweise weist er eine Veränderung seiner Dichte bzw. seines Strömungswiderstandes in Fließrichtung auf.

Alternativ (gegebenenfalls auch in Kombination) können auch lokale Dichteveränderungen, die mit der Struktur des Formgebungswerkzeugs korrespondieren, vorgesehen werden.

Besonders bevorzugt ist eine Ausführungsform bei der die Struktur des Formgebungswerkzeuges beispielsweise mit einem Laser eingebrannt wird. Dadurch können Kunststoffhalbzeuge oder Fertigteile von nahezu beliebiger Form und zudem von hoher Qualität erzeugt werden.

Weiterhin ist eine Vorrichtung besonders bevorzugt, bei der der poröse Körper und das Formgebungswerkzeug einstückig gefertigt sind. Durch die einstückige Herstellung können Herstellungskosten eingespart werden. Da vorzugsweise die mittlere Porengröße des porösen Körpers kleiner ist als die Größe der kleinsten Strukturen des Formgebungswerkzeuges, kann durch die einstükkige Fertigung die Porengröße direkt auf die Strukturen des Formgebungswerkzeuges angepaßt werden. Beim Austausch des Formgebungswerkzeuges wird somit automatisch auch der poröse Körper getauscht und weist somit immer die geeignete Porengröße auf.

Selbstverständlich ist es auch möglich, eine Vorrichtung vorzusehen, bei der z.B. Fasern oder Metalldrähte sowohl durch den porösen Körper als auch durch das Formgebungswerkzeug geführt werden. Während des Extrudiervorgangs werden die Fasern bzw. Metalldrähte langsam aus der Vorrichtung gezogen und aufgrund des Verdichtens der Formmasse mit der Formmasse beschichtet. Die Beschichtung ist sehr gleichmäßig und weist eine hohe Qualität auf.

Weitere Vorteile, Merkmale und Anwendungsmöglichkeiten der vorliegenden Erfindung werden deutlich anhand der Beschreibung einer besonderen Ausführungsform und der dazugehörigen Figuren. Es zeigen:
- Figur 1: einen Querschnitt durch eine erfindungsgemäße Vorrichtung und
- Figur 2: eine Draufsicht auf die Vorrichtung aus Figur 1.

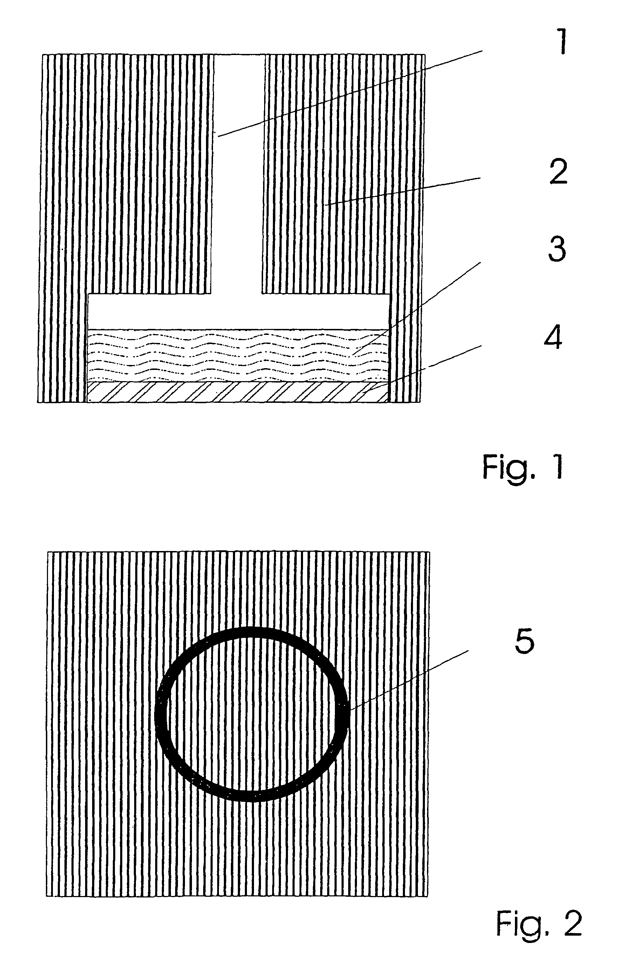

In Figur 1 ist schematisch eine erfindungsgemäße Vorrichtung gezeigt. Die Vorrichtung wird zu den Seiten durch den mit der Bezugszahl 2 versehenen massiven Körper begrenzt. Die Formmasse wird über den Gußkanal 1 in die Vorrichtung eingeführt. Der Gußkanal erweitert sich an seinem ausgangsseitigen Ende. Die Ausgangsöffnung wird durch den porösen Körper 3 und das Formgebungswerkzeug 4 gebildet.

Das Formgebungswerkzeug 4 kann prinzipiell eine beliebige Struktur aufweisen. In dem in Figur 2 gezeigten Beispiel bildet es eine kreisförmige Öffnung 5. Mit der in den Figuren gezeigten Vorrichtung kann somit ein Schlauch bzw. Rohr aus Kunststoff hergestellt werden. Die Formmasse wird zunächst in der Spritzgußmaschine verdichtet und plastifiziert und wird dann in den Gußkanal 1 geleitet. Die Formmasse steht hier im allgemeinen unter hohem Druck. Sie trifft dann auf den porösen Körper 3 und durchdringt ihn nach kurzer Zeit völlig. Erfindungsgemäß wird über dem porösen Körper 3 ein Druckgradient aufgebaut. Das heißt, daß der Druck im porösen Körper in Fließrichtung abnimmt. Schließlich trifft die Formmasse auf das Formgebungsprofil 4, welches dafür sorgt, daß die die Vorrichtung verlassende Formmasse die gewünschte Form hat. Dabei ist es selbstverständlich möglich, daß das Formgebungswerkzeug je nach Bedarf gekühlt oder geheizt wird.

Deutlich wird anhand der Figuren auch, daß das Formgebungsprofil unmittelbar an dem porösen Körper befestigt ist. Dadurch ist es möglich, daß die beiden Teilstücke des Formgebungsprofil nicht miteinander verbunden sind, sondern unabhängig voneinander an dem porösen Köper befestigt sind.

Für besondere Anwendungsfälle kann es von Vorteil sein, daß statt eines porösen Körpers zwei oder mehrere poröse Körper in gewissem Abstand zueinander angeordnet werden. Durch diese stufenweise stattfindende Homogenisierung kann möglicherweise das Gesamtvolumen der porösen Körper minimiert werden. Dies ist insbesondere bei aufwendig gestalteten porösen Körpern von Vorteil.

Durch das vorliegende Verfahren und die vorliegende Vorrichtung ist eine außergewöhnliche Homogenisierung und gleichmäßige Verteilung von viskosen Flüssigkeiten möglich. Dies ist insbesondere bei plastifizierten Kunststoffen ungewöhnlich, da durch den porösen Körper der Druck der viskosen Flüssigkeit unmittelbar vor dem Formgebungswerkzeug abgesenkt wird, was den in der Kunststoffherstellung angestrebten Verfahren diametral entgegensteht, wird doch üblicherweise versucht, den Druck auf der viskosen Flüssigkeit in der Nähe des Formgebungsprofils möglichst hoch und gleichmäßig zu erzielen, um eine Homogenisierung zu erreichen.

Durch die vorliegende Erfindung kann bereits bei einem geringeren Druck ein gutes Homogenisierungsergebnis erreicht werden. Zudem ist das vorliegende Verfahren deutlich weniger anfällig gegenüber Druckschwankungen als die bislang in der Technik bekannten Verfahren.

Zudem können durch die beschriebene erfindungsgemäße Herstellung von Formgebungswerkzeugen nahezu beliebige Formgebungswerkzeuge produziert werden. Dies erhöht die Vielseitigkeit der mittels des Verfahrens fabrizierbaren Kunststoffteile.

Eine weitere Anwendungsmöglichkeit des beschriebenen Verfahrens ist die Plattenherstellung aber auch die Beschichtung, d. h. das Auftragen eines Films. Dabei können auch feine planare Netze oder Strukturen aufgebracht bzw. gefertigt werden. Hierzu sollte die Spritzgußdüse im Abstand von ca. 0,5 bis etwa 1 mm über eine Platte bewegt oder auf eine rotierende Walzenoberfläche aufgebracht werden, in die vorzugsweise bereits Strukturen eingebracht worden sind.

## Patentansprüche

1. Verfahren zum Herstellen von Formteilen durch Extrudieren aus einer viskosen Flüssigkeit, bei welchem zur Homogenisierung und gleichmäßigen Verteilung die viskose Flüssigkeit durch einen porösen Körper geführt wird, der für die viskose Flüssigkeit permeabel ist, **dadurch gekennzeichnet, daß** die Flüssigkeit unmittelbar vor dem Durchtritt durch das die Form der extrudierten Formmasse bestimmende Formgebungsprofil durch den porösen Körper geführt wird.

2. Verfahren nach Anspruch 1, **dadurch gekennzeichnet, daß** die viskose Flüssigkeit unter einem Überdruck von mindestens 1 bar durch den porösen Körper geführt wird.

3. Verfahren nach einem der Ansprüche 1 oder 2, **dadurch gekennzeichnet, daß** die viskose Flüssigkeit ein plastifizierter Kunststoff ist.

4. Verfahren nach einem der Ansprüche 1 bis 3, **dadurch gekennzeichnet, daß** Fasern durch den porösen Körper und das Formgebungsprofil geführt werden.

5. Vorrichtung zum Herstellen von Formteilen durch Extrudieren aus viskosen Flüssigkeiten, mit einer Zufuhreinrichtung für die viskose Flüssigkeit, einer Austrittsöffnung, die über einen Fließkanal mit der Zuführeinrichtung verbunden ist und einem porösen Körper, der innerhalb des Fließkanals so angeordnet ist, daß zwecks Homogenisierung und gleichmäßiger Verteilung der viskosen Flüssigkeit der Fließweg im wesentlichen ausschließlich durch den porösen Körper führt, **dadurch gekennzeichnet, daß** das die Form der extrudierten Formmasse bestimmende Formgebungsprofil unmittelbar an dem porösen Körper befestigt ist.

6. Vorrichtung nach Anspruch 5, **dadurch gekennzeichnet, daß** der poröse Körper Porenöffnungen mit einem mittleren Durchmesser von höchstens 0,2 mm hat.

7. Vorrichtung nach Anspruch 5 oder 6, **dadurch gekennzeichnet, daß** der poröse Körper aus einem Sintermaterial, das aus Sinterpulver mit Komgrößen im Bereich zwischen 0,1 und 1.000 Mikrometer, vorzugsweise im Bereich zwischen 10 und 500 Mikrometer hergestellt wurde.

8. Vorrichtung nach einem der Ansprüche 5 bis 7, **dadurch gekennzeichnet, daß** der poröse Körper und das Formgebungsprofil im wesentlichen formschlüssig miteinander verbunden sind.

9. Vorrichtung nach einem der Ansprüche 5 bis 8, **dadurch gekennzeichnet, daß** der poröse Körper und das Formgebungsprofil einstückig gefertigt sind.

10. Vorrichtung nach einem der Ansprüche 5 bis 9, **dadurch gekennzeichnet, daß** die mittlere Porengröße des porösen Körpers kleiner ist als die Größe der kleinsten Strukturen des Formgebungsprofil.

11. Vorrichtung nach einem der Ansprüche 5 bis 10, **dadurch gekennzeichnet, daß** der poröse Körper In Austrittsrichtung von einer für die viskose Flüssigkeit undurchlässigen Schicht bzw. Ebene begrenzt wird, in die Durchgangsbohrungen und/oder -schlitze eingeformt sind.

12. Vorrichtung nach eine der Ansprüche 5 bis 11, **dadurch gekennzeichnet, daß** die Struktur des Formgebungsprofiles mit einem Laser einbrennbar ist.

13. Vorrichtung nach einem der Ansprüche 5 bis 12, **dadurch gekennzeichnet, daß** der poröse Körper und/oder das Formgebungsprofil quer zur Fließrichtung der viskosen Flüssigkeit verlaufende Kühlkanäle bzw. -bohrungen aufweist bzw. aufweisen.

14. Vorrichtung nach einem der Ansprüche 5 bis 13, **dadurch gekennzeichnet, daß** der poröse Körper eine inhomogene Dichte aufweist, wobei die Dichte vorzugsweise in Fließrichtung zu- oder abnimmt.

## Claims

1. A process for the production of shaped portions by extrusion from a viscous liquid, wherein for homogenisation and uniform distribution the viscous liquid is passed through a porous body which is permeable for the viscous liquid, **characterised in that** the liquid is passed through the porous body immediately prior to passing through the shaping profile which determines the shape of the extruded shaping material.

2. A process according to claim 1 **characterised in that** the viscous liquid is passed through the porous body under an increased pressure of at least 1 bar.

3. A process according to one of claims 1 and 2 **characterised in that** the viscous liquid is a plasticised plastic material.

4. A process according to one of claims 1 to 3 **characterised in that** fibres are passed through the porous body and the shaping profile.

5. Apparatus for the production of shaped portions by extrusion from viscous liquids, comprising a feed device for the viscous liquid, an outlet opening which is connected to the feed device by way of a flow passage and a porous body which is arranged within the flow passage in such a way that, for the purposes of homogenisation and uniform distribution of the viscous liquid the flow path passes substantially exclusively through the porous body, **characterised in that** the shaping profile determining the shape of the extruded shaping material is fixed directly to the porous body.

6. Apparatus according to claim 5 **characterised in that** the porous body has pore openings of a mean diameter of at most 0.2 mm.

7. Apparatus according to claim 5 or claim 6 **characterised in that** the porous body comprises a sintered material which was produced from sintering powder of grain sizes in the range of between 0.1 and 1000 micrometres, preferably in the range of between 10 and 500 micrometres.

8. Apparatus according to one of claims 5 to 7 **characterised in that** the porous body and the shaping profile are substantially positively lockingly connected together.

9. Apparatus according to one of claims 5 to 8 **characterised in that** the porous body and the shaping profile are made in one piece.

10. Apparatus according to one of claims 5 to 9 **characterised in that** the mean pore size of the porous body is smaller than the size of the smallest structures of the shaping profile.

11. Apparatus according to one of claims 5 to 10 **characterised in that** the porous body is delimited in the outlet direction by a plane or layer which is impermeable for the viscous liquid and in which through bores and/or slots are formed.

12. Apparatus according to one of claims 5 to 11 **characterised in that** the structure of the shaping profile can be burnt in with a laser.

13. Apparatus according to one of claims 5 to 12 **characterised in that** the porous body and/or the shaping profile has or have cooling passages or bores extending transversely with respect to the flow direction of the viscous liquid.

14. Apparatus according to one of claims 5 to 13 **characterised in that** the porous body is of a non-homogeneous density, the density preferably increasing or decreasing in the flow direction.

## Revendications

1. Procédé de fabrication de pièces moulées par extrusion d'un liquide visqueux, dans lequel le liquide visqueux est guidé à travers un corps perméable au liquide visqueux pour l'homogénéisation et la distribution uniforme, **caractérisé en ce que** le liquide est guidé à travers le corps poreux juste avant le passage à travers une filière définissant la forme de la matière de moulage extrudée.

2. Procédé selon la revendication 1, **caractérisé en ce que** le liquide visqueux est guidé à travers le corps poreux avec une surpression d'au moins 1 bar.

3. Procédé selon l'une des revendications 1 ou 2, **caractérisé en ce que** le liquide visqueux est une matière plastique ramollie.

4. Procédé selon l'une des revendications 1 à 3, **caractérisé en ce que** des fibres sont guidées à travers le corps poreux et la filière.

5. Dispositif de fabrication de pièces moulées par extrusion de liquides visqueux, ledit dispositif comportant un dispositif d'amenée du liquide visqueux, une ouverture de sortie reliée au dispositif d'amenée par un canal d'écoulement, et un corps poreux qui est disposé à l'intérieur du canal d'écoulement de sorte que le trajet d'écoulement passe sensiblement exclusivement à travers le corps poreux dans un but d'homogénéisation et de distribution uniforme du liquide visqueux, **caractérisé en ce qu'**une filière définissant la forme de la matière de moulage extrudée est fixé directement au corps poreux.

6. Dispositif selon la revendication 5, **caractérisé en ce que** le corps poreux comporte des ouvertures de pore ayant un diamètre moyen de 0,2 mm maximum.

7. Dispositif selon la revendication 5 ou 6, **caractérisé en ce que** le corps poreux est réalisé à partir d'un matériau fritté constitué d'une poudre de frittage présentant une granularité comprise entre 0,1 et 1000 µm, avantageusement entre 10 et 500 µm.

8. Dispositif selon l'une des revendications 5 à 7, **caractérisé en ce que** le corps poreux et la filière sont liés sensiblement par correspondance de forme.

9. Dispositif selon l'une des revendications 5 à 8, **caractérisé en ce que** le corps poreux et la filière sont réalisés d'une seule pièce.

10. Dispositif selon l'une des revendications 5 à 9, **caractérisé en ce que** la dimension moyenne des pores du corps poreux est inférieure à la dimension des plus petites structures de la filière.

11. Dispositif selon l'une des revendications 5 à 10, **caractérisé en ce que** le corps poreux est limité par une couche respectivement un plan qui ne laisse pas passer le liquide visqueux et dans lequel sont ménagés des perçages et des fentes de passage.

12. Dispositif selon l'une des revendications 5 à 11, **caractérisé en ce que** la structure de la filière est découpée avec un laser.

13. Dispositif selon l'une des revendications 5 à 12, **caractérisé en ce que** le corps poreux et/ou la filière comportent des canaux respectivement des perçages de refroidissement s'étendant transversalement à la direction d'écoulement du liquide visqueux.

14. Dispositif selon l'une des revendications 5 à 13, **caractérisé en ce que** le corps poreux présente une densité hétérogène, la densité croissant ou décroissant avantageusement dans le sens d'écoulement.
